# EUROPEAN PATENT APPLICATION

(11) **EP 3 483 955 A1**
(43) Date of publication of application: **15.05.2019**
(21) Application number: 18203046.0
(22) Date of filing: 29.10.2018
(51) Int. Cl.: H01M 4/131, H01M 4/525, H01M 10/052, H01M 10/0562

(54) **ELECTRODE MATERIAL AND BATTERY**

(30) Priority: 14.11.2017 JP 2017219296
(71) Applicant: Panasonic Intellectual Property Management Co., Ltd., Osaka-shi, Osaka 540-6207 (JP)
(72) Inventor: KOUZAKI, Takashi, Osaka-shi, Osaka 540-6207 (JP); SUGAWARA, Ryo, Osaka-shi, Osaka 540-6207 (JP)
(74) Representative: Grünecker Patent- und Rechtsanwälte PartG mbB

(57) **Abstract**

An electrode material includes: active material particles each containing nickel; and cover layers which cover the surfaces of the respective active material particles, the cover layers each containing niobium. In an X-ray photoelectron spectrum of the electrode material, the ratio A/B of an intensity A of a peak belonging to Nb3d to an intensity B of a peak belonging to Ni2p satisfies 0<A/B<2.

## Description

### BACKGROUND

### 1. Technical Field

The present disclosure relates to an electrode material and a battery using the same.

### 2. Description of the Related Art

Recently, in association with the reduction in size and the reduction in weight of electric products, demand of lithium secondary batteries used as main power sources thereof has been increased. The lithium secondary battery has been characterized by a high electromotive force and a high energy density. As one of shortcomings of related lithium secondary batteries, the use of a combustible nonaqueous electrolyte liquid may be mentioned.

On the other hand, instead of using a combustible nonaqueous electrolyte liquid, development of an all-solid lithium secondary battery using an incombustible solid electrolyte has been carried out. In the all-solid lithium secondary battery, the ion conductivity at the interface between the solid electrolyte and an active material particle is required to be improved.

Japanese Unexamined Patent Application Publication Nos. 2010-225309 and 2016-42417 have disclosed that a cover layer of a lithium ion conductive material is formed on the surface of each active material particle.

### SUMMARY

In one general aspect, the techniques disclosed here feature an electrode material including: active material particles each containing nickel; and cover layers which cover surfaces of the respective active material particles, the cover layers each containing niobium, wherein an X-ray photoelectron spectrum of the electrode material, the ratio A/B of an intensity A of a peak belonging to Nb3d to an intensity B of a peak belonging to Ni2p satisfies 0<A/B<2.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a schematic view showing the structure of an electrode material according to Embodiment 1;
Fig. 2 is a flowchart showing one example of a method for manufacturing the electrode material;
Fig. 3 is a schematic view showing the structure of a battery according to Embodiment 2; and
Fig. 4 is a graph showing the relationship between the ratio in peak intensity and the coulomb efficiency.

### DETAILED DESCRIPTION

### (Underlying Knowledge Forming Basis of the Present Disclosure)

The ion conductive resistance between a solid electrolyte and an active material particle is significantly larger than the ion conductive resistance between a nonaqueous electrolyte liquid and an active material particle. Between the nonaqueous electrolyte liquid and the active material particle, a solid electrolyte interphase (SEI) film which enables lithium ions to easily intrude into and escape from the inside of the active material particle is formed. The SEI film is not spontaneously formed between the solid electrolyte and the active material particle. Hence, in an all-solid lithium secondary battery, it is difficult to sufficiently use lithium ions contained in the active material particle for charge and discharge at a high rate.

In order to decrease the ion conductive resistance between the solid electrolyte and the active material particle, the formation of a cover layer corresponding to the SEI film on the surface of the active material particle may be conceived. As a material of the cover layer, there may be used a lithium ion conductive material having the same characteristics as those of the SEI film which allows lithium ions but not electrons to pass therethrough. A typical example of the lithium ion conductive material is LiNbO₃. There has been reported that when the surface of the active material particle is covered with the lithium ion conductive material, the ion conductive resistance between the solid electrolyte and the active material particle is decreased, and the discharge capacity of the battery is increased. However, when the lithium ion conductive material is an insulating material, if the active material particle covered with the lithium ion conductive material is used as an electrode, the electron conductivity of the electrode is decreased, and the electric resistance is increased. In order to improve the performance of the battery, while the balance between the ion conductivity and the electron conductivity is taken into consideration, the cover layer is required to be formed on the surface of the active material particle.

Japanese Unexamined Patent Application Publication No. 2010-225309 has disclosed that the molar rate of an element X contained in the cover layer with respect to the total metal elements other than lithium in a positive electrode active material secondary particle is 0.1 to 10.0 percent by mole. Japanese Unexamined Patent Application Publication No. 2016-42417 has disclosed that the coverage of a coating portion on the surface of a positive electrode active material is 50% or more and preferably in a range of 75% to 95%. Although the coverage can be construed to indicate (the area of a portion of the surface of the active material particle covered with the coating portion/the area of the surface of the active material particle), a method to measure the coverage has not been disclosed.

The surface of the active material particle covered with the ion conductive material also includes an electrically conductive region and an insulating region. The electrically conductive region is a region in which electrons flows but ions are not likely to flow. The insulating region is a region in which electrons are not allowed to flow but ions are likely to flow. In order to simultaneously obtain the ion conductivity and the electron conductivity, the present inventors focused on the electrically conductive region and the insulating region.

As for the electron conductivity, even if an insulating material having a thickness of 2 nm is present, a current is allowed to flow by the tunnel effect. Hence, the electrically conductive region can be regarded as a region in which the thickness of the cover layer of the ion conductive material is 2 nm or less or a region which is not covered with the ion conductive material. The insulating region can be regarded as a region in which the thickness of the cover layer of the ion conductive material is more than 2 nm.

The present inventors assumed that when the ratio of the electrically conductive region to the insulating region is appropriately controlled, a high coulomb efficiency may be achieved, and as a result, the electrode material and the battery of the present disclosure were finally obtained. In particular, besides a method to identify the ratio of the insulating region to the electrically conductive region, the present inventors also found a method to control the ratio of the insulating region to the electrically conductive region.

As one example of the method to form the cover layer of the ion conductive material on the surface of the active material particle, a liquid phase covering method and a vapor phase covering method may be mentioned. Although the methods described above are each a method suitable to form a cover layer having a uniform thickness, those methods are each a method not suitable to intentionally form a cover layer having a non-uniform thickness. For example, according to the liquid phase covering method, when the concentration of the solution, the time for contact of the active material particles with the solution, the temperature of the solution, and the like are optimized, the average film thickness of the cover layers can be controlled to a certain extent. However, the control of the ratio of the insulating region to the electrically conductive region is impossible. The same thing can also be said for the vapor phase covering method, and the control of the ratio of the insulating region to the electrically conductive region is impossible from a principle point of view.

In addition, when the thickness of the cover layer is on the order of nanometers, it is difficult to identify the electrically conductive region and the insulating region by observation using an electron microscope and to calculate the ratio of the insulating region to the electrically conductive region.

The present disclosure provides an electrode material which can achieve a high coulomb efficiency. The present disclosure provides a method to control the ratio of the insulating region to the electrically conductive region. The present disclosure provides a method to quantify the ratio of the insulating region to the electrically conductive region.

### (Summary of aspects according to the present disclosure)

An electrode material according to a first aspect of the present disclosure is an electrode material comprising:
active material particles containing nickel (Ni); and
cover layers which contain niobium (Nb) and which cover the surfaces of the active material particles, and
in a spectrum obtained when the electrode material is analyzed by an X-ray photoelectron spectroscopy method, the ratio A/B of an intensity A of a peak belonging to Nb3d to an intensity B of a peak belonging to Ni2p satisfies the relationship represented by 0<A/B<2.

The electrode material according to the first aspect is able to obtain a high coulomb efficiency.

In a second aspect of the present disclosure, for example, in the electrode material according to the first aspect, the ratio A/B satisfies the relationship represented by 0.48≤A/B≤1.25. The electrode material of the second aspect is able to obtain a higher coulomb efficiency.

In a third aspect of the present disclosure, for example, in the electrode material according to the first or the second aspect, the cover layers cover only parts of the surfaces of the active material particles. According to the third aspect, the balance between the ion conductivity and the electron conductivity can be easily obtained.

In a fourth aspect of the present disclosure, for example, in the electrode material according to any one of the first to the third aspects, the active material particles further contain Co and Al. According to the fourth aspect, the active material particles are able to obtain a high energy density and an excellent safety.

In a fifth aspect of the present disclosure, for example, in the electrode material according to any one of the first to the fourth aspects, the cover layers are formed of an ion conductive material. When the surfaces of the active material particles are covered with the ion conductive material, the ion conductive resistance between the solid electrolyte and the active material particles is decreased. This decrease in ion conductive resistance is advantageous to achieve a high coulomb efficiency.

A battery according a sixth aspect of the present disclosure comprises a positive electrode including the electrode material according to any one of the first to the fifth aspect. Since the electrode material of the present disclosure is used as a positive electrode active material, the battery of the sixth aspect obtains a high coulomb efficiency.

In a seventh aspect of the present disclosure, for example, the battery according to the sixth aspect further comprises a negative electrode and a sulfide solid electrolyte layer disposed between the positive electrode and the negative electrode. When a sulfide solid electrolyte is used as the solid electrolyte, a battery having a high energy density can be obtained.

Hereinafter, embodiments of the present disclosure will be described with reference to the drawings. The present disclosure is not limited to the following embodiments.

### (Embodiment 1)

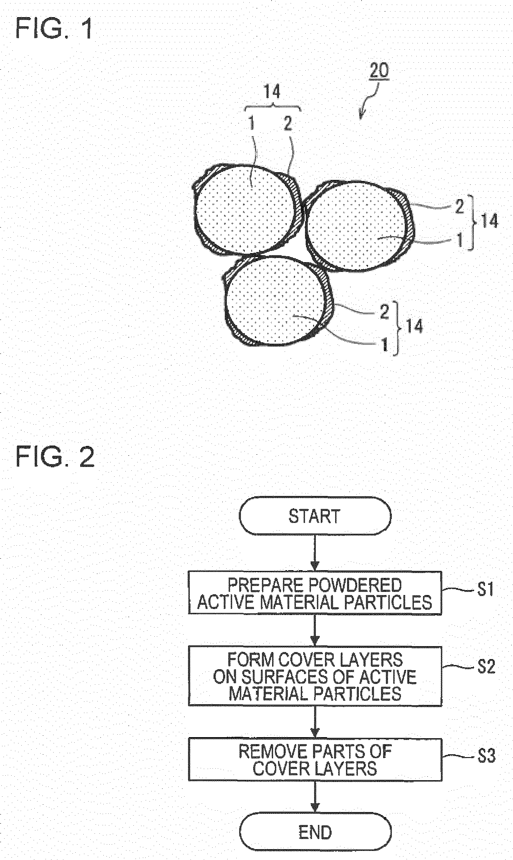

Fig. 1 is a schematic view showing the structure of an electrode material according to Embodiment 1. As shown in Fig. 1, an electrode material 20 of this embodiment is formed of a plurality of composite particles 14. The composite particles 14 each include an active material particle 1 and a cover layer 2. In other words, the electrode material 20 includes the active material particles 1 and the cover layers 2. The cover layer 2 contains Nb and covers the surface of the active material particle 1.

The active material particle 1 can be a particle of a compound containing Ni. As an example of the compound containing Ni, for example, there may be mentioned LiₓNiO₂, LiₓCo_{y}Ni_{1-y}O₂, LiₓCo_{y}Ni_{y}M_{1-y-y'}O_{z}, LiₓMn_{y}Ni_{y'}M_{1-y-y'}O_{z}, LiₓNi_{1-y}M_{y}O_{z}, or LiₓMn_{2-y}Ni_{y}O₄. M is at least one selected from the group consisting of Na, Mg, Sc, Y, Mn, Fe, Co, Cu, Zn, Al, Cr, Pb, Sb, and B. x, y, y', and z satisfy 0<x≤1.2, 0≤y≤0.9, 0≤y'≤0.9, and 2.0≤z≤2.3, respectively. The value x is an initial value and is increased/decreased in association with charge/discharge. LiₓNi_{1-y}M_{y}O_{z} may be, for example, LiNiCoAlO₂ (NCA: lithium Nickel Cobalt Aluminum Oxide) or LiNiCoMnO₂ (NCM: lithium Nickel Cobalt Manganese Oxide). NCA and NCM each have advantages, such as a high energy density and an excellent safety. The active material particle 1 contains, for example, no Nb.

The active material particle 1 may also be, for example, at least one selected from the group consisting of LiₓNi_{1-y}M_{y}O_{z}, LiₓMn_{2-y}NiyO₄, and Li_{1+x'}Ni_{y"}M_{1-x'-y"}O₂. In addition, M is at least one selected from the group consisting of Na, Mg, Sc, Y, Mn, Fe, Co, Cu, Zn, Al, Cr, Pb, Sb, and B. x, y, y', z, x', and y" satisfy 0≤x≤1.2, 0≤y≤0.2, 1.2≤y'≤2.0, 1.8≤z≤3.0, 0≤x'≤0.2, and 0.8≤y"≤1.0, respectively. The Ni contents of those materials are each approximately the same as or smaller than the Ni content of NCA of each of the following samples 1 to 4.

Besides the compounds described above, other compounds, such as a transition metal chalcogenide, a conjugated polymer using an organic electrically conductive material, and a Chevrel phase compound, may also be used as the material of the active material particle 1. A mixture containing at least two materials having different compositions may also be used. That is, in the active material particles 1, at least one active material particle having a first composition and at least one active material particle having a second composition may be simultaneously present.

The active material particle 1 may be either a positive electrode active material particle or a negative electrode active material particle. The active material particle 1 is typically a positive electrode active material particle. Although being not particularly limited, the average particle diameter of the active material particles 1 is, for example, in a range of 1 to 30 µm.

In this specification, the average particle diameter of the particles is calculated by the following method, A particle group is observed by an electron microscope, and the area of a specific particle in an electron microscopic image is calculated by image processing. When only the particle group cannot be directly observed, the structure including particles is observed by an electron microscope, and the area of a specific particle in an electron microscopic image is calculated by image processing. The diameter of a circle having the same area as the area thus calculated is regarded as the diameter of the specific particle. The diameters of an arbitrary number (such as 10) of particles are calculated, and the average value thereof is regarded as the average particle diameter. The shape of the active material particle 1 is not particularly limited.

The cover layer 2 is formed of an ion conductive material. The ion conductive material can be a compound containing Nb. As an example of the compound containing Nb, LixNbOz and NbOy (0<x≤1.2, 0≤y≤2.7, and 2.0≤z≤3.3) may be mentioned. In the cover layer 2, besides the ion conductive material, at least one selected from LiₓO(0.8≤x≤2.3) and metal lithium may also be contained. The ion conductive material can be, in particular, a lithium ion conductive material. The cover layer 2 contains, for example, no Ni.

The cover layer 2 may also be, for example, at least one selected from the group consisting of LiₓNbO_{z} and NbO_{y}. In this case, x, y, and z satisfy 0<x≤1.2, 2.8≤y≤4.0, and 2.75≤z≤4.0, respectively. In the cover layer 2, at least one selected from the group consisting of LiₓO(0.8≤x≤2.3 holds) and metal lithium may also be contained. The Nb contents of those materials each may be approximately the same as or smaller than the Nb content of LiNbO₃ of each of the following samples 1 to 4.

The cover layer 2 is responsible to decrease the ion conductive resistance between the solid electrolyte and the active material particle 1. When the surface of the active material particle 1 is covered with the ion conductive material, the ion conductive resistance between the solid electrolyte and the active material particle 1 is decreased. This decrease in ion conductive resistance is advantageous to achieve a high coulomb efficiency.

When the ion conductive material is an insulating material, if the active material particles covered with the ion conductive material are used for the electrode, the electron conductivity of the electrode is decreased, and the electric resistance is increased. In order to improve the performance of the battery, while the balance between the ion conductivity and the electron conductivity is taken into consideration, the cover layer may be formed on the surface of the active material particle.

In Fig. 1, the cover layer covers only a part of the surface of the active material particle 1. On the surface of the active material particle 1, the cover layer 2 may be divided into at least two portions. According to the structure as described above, the balance between the ion conductivity and the electron conductivity is likely to be obtained. In the electrode material 20, besides the active material particles 1 having the structure as shown in Fig. 1, at least one active material particle 1, the total surface of which is covered with the cover layer 2, may also be present, and at least one active material particle 1 covered with no cover layer 2 may also be present.

As described above, the surface of the active material particle 1 covered with the ion conductive material includes an electrically conductive region and an insulating region. The electrically conductive region is a region in which electrons flow but ions are not likely to flow. The insulating region is a region in which no electrons flow but ions are likely to flow.

As for the electron conduction, even if an insulating material having a thickness of 2 nm is present, a current is allowed to flow by the tunnel effect. Hence, the electrically conductive region can be regarded as a region in which the thickness of the cover layer 2 of the ion conductive material is 2 nm or less or a region covered with no ion conductive material. The insulating region can be regarded as a region in which the thickness of the cover layer 2 of the ion conductive material is more than 2 nm.

When the ratio between the electrically conductive region and the insulating region is appropriately controlled, a high coulomb efficiency can be achieved. The ratio of the insulating region to the electrically conductive region can be obtained by the following method.

When the electrode material 20 is analyzed by an X-ray photoelectron spectroscopy (XPS) method, soft X-rays are irradiated on the electrode material 20, and photoelectrons emitted from the electrode material 20 are detected by an analyzer. When AlKα rays (1,486.6 eV) are used as a soft X-ray source, the escape depth of photoelectrons is approximately 2 nm. In the insulating region in which the thickness of the cover layer 2 is more than 2 nm, a peak derived from an element contained in the active material particle 1 cannot be detected. In the electrically conductive region in which the thickness of the cover layer 2 is 2 nm or less, a peak derived from an element contained in the active material particle 1 is detected. By the use of the principle described above, when the ratio of the intensity of the peak derived from the element contained in the cover layer 2 to the intensity of the peak derived from the element contained in the active material particle 1 is measured, the value proportional to the area ratio of the insulating region to the electrically conductive region can be obtained.

In the electrode material 20, Ni is contained only in the active material particle 1. In the electrode material 20, Nb is contained only in the cover layer 2. In a spectrum obtained when the electrode material 20 is analyzed by an X-ray photoelectron spectroscopy (XPS) method, the ratio A/B of the intensity A of the peak belonging to Nb3d to the intensity B of the peak belonging to Ni2p satisfies the relationship represented by 0<A/B<2. When the ratio A/B satisfies the relationship of 0<A/B<2, the electrode material 20 is able to obtain a high coulomb efficiency. The ratio A/B may also satisfy the relationship of 0.48<A/B<1.25 and may further satisfy the relationship of 0.48<A/B<1.05. In this case, the electrode material 20 is able to obtain a higher coulomb efficiency. In addition, the peak belonging to Ni2p indicates, in particular, a peak belonging to Ni2p_{3/2}. The peak belonging to Nb3d indicates, in particular, a peak belonging to Nb3d_{5/2}. When the electrode material 20 is used for a battery, in accordance with the charge/discharge states of the battery, although the binding energy at which the peak is observed may be shifted in some cases, the peak belonging to Ni2p_{3/2} is observed at a binding energy of 840 to 890 eV. In addition, the peak belonging to Nb3d_{5/2} is observed at a binding energy of 195 to 220 eV. The value of the binding energy of each peak may be obtained by correction using a physical adsorption carbon peak belonging to C1s of 284.8 eV.

Next, a method to manufacture the electrode material 20 will be described. The ratio of the insulating region to the electrically conductive region can be controlled by the following method.

As shown in Fig. 2, in Step S1, powdered active material particles 1 are prepared. The powdered active material particles 1 are formed, for example, by a solid phase method. In the solid phase method, raw material powders are mixed together and fired, so that the powdered active material particles 1 are obtained. In addition, powdered active material particles 1 having various compositions are commercially available and can be easily obtained.

Next, in Step S2, the cover layer 2 is formed on the surface of the active material particle 1. A method to form the cover layer 2 is not particularly limited. As an example of the method to form the cover layer 2, a liquid phase covering method and a vapor phase covering method may be mentioned.

For example, in the liquid phase covering method, a precursor solution of the ion conductive material is applied on the surfaces of the active material particles 1. When the cover layer 2 is formed from LiNbO₃, the precursor solution can be a mixed solution (sol solution) of a solvent, a lithium alkoxide, and a niobium alkoxide. As an example of the lithium alkoxide, lithium ethoxide may be mentioned. As an example of the niobium alkoxide, niobium ethoxide may be mentioned. The solvent is, for example, an alcohol, such as ethanol. In accordance with a target composition of the cover layer 2, the amounts of the lithium alkoxide and the niobium alkoxide are adjusted. If needed, water may also be added to the precursor solution. The precursor solution may be either acid or alkali.

A method to apply the precursor solution on the surfaces of the active material particles 1 is not particularly limited. For example, the precursor solution may be applied on the surfaces of the active material particles 1 using a tumbling fluidized coating apparatus. According to the tumbling fluidized coating apparatus, while the active material particles 1 are tumbled and fluidized, the precursor solution is sprayed on the active material particles 1, so that the precursor solution can be applied on the surfaces of the active material particles 1. As a result, a precursor film is formed on the surface of the active material particle 1. Subsequently, the active material particles 1 covered with the precursor films are heat-treated. The gelation of the precursor film is advanced by the heat treatment, so that the cover layer 2 is formed. At this point, the cover layer 2 covers substantially all the surface of the active material particle 1. The thickness of the cover layer 2 is substantially uniform.

As an example of the gas phase covering method, for example, there may be mentioned a pulsed laser deposition (PLD) method, a vacuum deposition method, a sputtering method, a thermal chemical vapor deposition (CVD) method, or a plasma CVD method. For example, in the PLD method, a pulsed laser (such as KrF excimer laser, wavelength: 248 nm) having high energy is irradiated on the ion conductive material functioning as a target, and a sublimed ion conductive material is deposited on the surfaces of the active material particles 1. When the cover layer 2 is formed from LiNbO₃, sintered LiNbO₃ having a high density is used as the target.

Next, in Step S3, the cover layer 2 is partially removed from the surface of the active material particle 1. Alternatively, the thickness of the cover layer 2 is decreased. As a result, a powdered electrode material 20 is obtained. In particular, a powder of the active material particles 1 covered with the cover layers 2 is stirred. When the powdered active material particles 1 are mechanically stirred, the active material particles 1 collide with each other, so that the cover layers 2 are peeled away by collision energy. Alternatively, the thickness of the cover layer 2 is decreased by collision energy. By the principle described above, the ratio of the insulating region to the electrically conductive region can be controlled in a desired range. In particular, in accordance with conditions, such as a stirring method and a stirring time, the ratio of the insulating region to the electrically conductive region can be controlled.

The step of stirring the powdered active material particles 1 may be performed using a mixing and stirring apparatus, such as a vibration mixer, a planetary centrifugal mixer, a ball mill, a rotary mixer, a double arm mixer, or a kneader. The powdered active material particles 1 may be stirred using at least two of the above mixing and stirring apparatuses in combination. The stirring may be performed in an inert gas atmosphere, such as an argon gas atmosphere. The stirring time is not particularly limited. In one example, the stirring time is 3 to 12 minutes. The stirring time may also be 3 to 8 minutes.

Through the steps described above, the electrode material 20 is obtained to have a desired ratio A/B.

### (Embodiment 2)

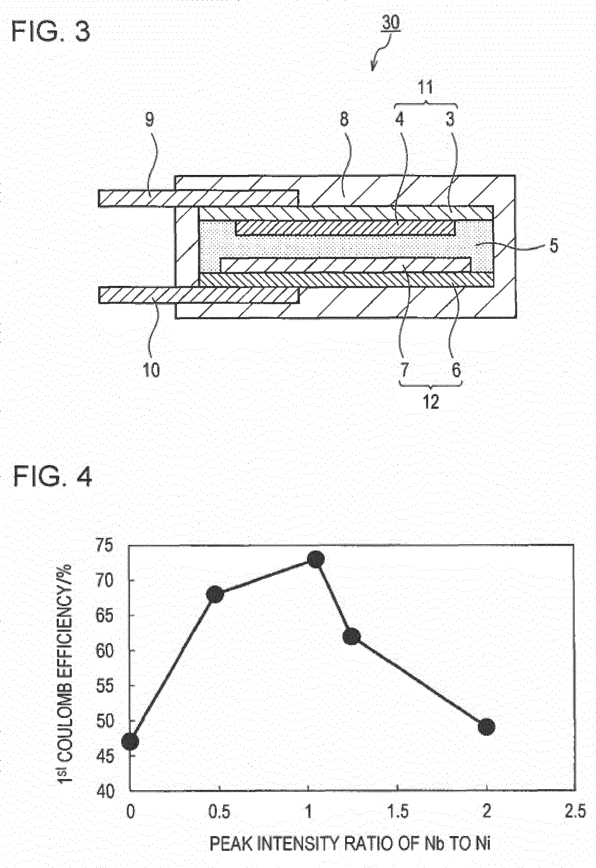

Fig. 3 is a schematic view showing the structure of a battery according to Embodiment 2. As shown in Fig. 3, a battery 30 of this embodiment includes a positive electrode 11, an electrolyte layer 5, a negative electrode 12, a battery case 8, a positive electrode lead 9, and a negative electrode lead 10. The positive electrode 11 includes a positive electrode collector 3 and a positive electrode active material layer 4. The negative electrode 12 includes a negative electrode collector 6 and a negative electrode active material layer 7. The positive electrode active material layer 4 is disposed on the positive electrode collector 3. The negative electrode active material layer 7 is disposed on the negative electrode collector 6. The electrolyte layer 5 is disposed between the positive electrode 11 and the negative electrode 12. In particular, the electrolyte layer 5 is disposed between the positive electrode active material layer 4 and the negative electrode active material layer 7. The positive electrode 11, the electrolyte layer 5, and the negative electrode 12 are disposed in the battery case 8. The positive electrode lead 9 is connected to the positive electrode collector 3 and extends to the outside of the battery case 8. The negative electrode lead 10 is connected to the negative electrode collector 6 and extends to the outside of the battery case 8.

As a material for the collectors 3 and 6, an electron conductive material which causes no chemical reaction in the battery 30 is used. The material for the collector 3 may be either the same as or different from the material for the collector 6. As an example of the material for the collectors 3 and 6, for example, there may be mentioned copper, stainless steel, nickel, titanium, carbon, lithium, indium, or an electrically conductive resin. As the material for the collectors 3 and 6, copper or a copper alloy can be typically used. The surface of each of the materials mentioned above may be oxidized. The collectors 3 and 6 each may include a substrate and a coating film. The substrate is formed, for example, of a metal material, such as copper or stainless steel. The coating film is formed on the surface of the substrate and is formed, for example, from carbon, nickel, or titanium. The shape of each of the collectors 3 and 6 is not particularly limited. As an example of the shape of each of the collectors 3 and 6, foil, a film, a sheet, a net, a punched metal, a lath body, a porous body, a foamed body, or a fiber molded body may be mentioned. The surface of each of the collectors 3 and 6 may be roughened.

The positive electrode active material layer 4 includes, for example, the electrode material 20 according to Embodiment 1. Since the electrode material 20 is used as the positive electrode active material, the battery 30 of this embodiment has a high coulomb efficiency. The positive electrode active material layer 4 may also include other materials, such as an ion conductive material, an electrically conductive auxiliary agent, and binding agent.

The electrolyte layer 5 is formed, for example, from an ion conductive material. As an example of the material for the electrolyte layer 5, a sulfide, an oxide, a nitride, or a lithium compound may be mentioned. The electrolyte layer 5 may also contain at least one selected from Li, P, S, O, Ti, Ge, Al, Si, N, B, La, Zr, Y, Br, Cl, Bi, F, and I. The electrolyte layer 5 may also include an organic electrically conductive material, such as a conjugated polymer.

The material for the electrolyte layer 5 can be a solid electrolyte, such as an organic polymer solid electrolyte, an oxide solid electrolyte, or a sulfide solid electrolyte. The material for the electrolyte layer 5 is typically a sulfide solid electrolyte. The sulfide solid electrolyte has an excellent moldability and a high ion conductivity. As the solid electrolyte, when the sulfide solid electrolyte is used, a battery 30 having a high energy density can be obtained. Among sulfide solid electrolytes, Li₂S-P₂S₅ has a high electrochemical stability and a high ion conductivity. As the solid electrolyte, when Li₂S-P₂S₅ is used, a battery 30 having a higher energy density can be obtained.

The negative electrode active material layer 7 includes a negative electrode active material. As an example of the negative electrode active material, a carbon material, a lithium alloy, a metal oxide, a lithium nitride (Li₃N), metal lithium, or a metal indium may be mentioned. As an example of the carbon material, artificial graphite, graphite, non-graphitizable carbon, or graphitizable carbon may be mentioned. As an example of the lithium alloy, there may be mentioned an alloy containing lithium and at least one metal selected from the group consisting of Al, Si, Pb, Sn, Zn, and Cd. As an example of the metal oxide, there may be mentioned LiFe₂O₃, WO₂, MoO₂, SiO, or CuO. A mixture or a composite containing a plurality of materials may also be used as the negative electrode active material. The negative electrode active material layer 7 may also include other materials, such as an ion conductive material, an electrically conductive auxiliary agent, and a binding agent.

The battery case 8 is formed, for example, from an aluminum laminate film. The battery case 8 may also be formed from a metal material, such as iron, aluminum, or nickel or may also be formed from a plastic material.

The leads 9 and 10 are each formed from a material having a high electron conductivity. A material for the leads 9 and 10 may be either the same as or different from the material for the collectors 3 and 6. As an example of the material for the leads 9 and 10, a metal, such as Cu, Al, Ni, Li, or In, may be mentioned. The material for the leads 9 and 10 may also be a compound containing at least one element selected from the above metal group or may also be an alloy containing at least one element selected from the above metal group.

### [Examples]

Hereinafter, examples of the present disclosure will be described. The following are described by way of example, and the present disclosure is not limited to the following examples.

### (Sample 1)

As the active material particles, a LiNi_{0.8}CO_{0.15}Al_{0.05}O₂ (NCA) powder was prepared. By the use of a tumbling fluidized coating apparatus, a cover layer of LiNbO₃ was formed on the surface of each active material particle. A target film thickness of the cover layer was 7 nm. In particular, a coating solution containing a precursor of lithium niobate was prepared. By the use of the tumbling fluidized coating apparatus, the coating solution was sprayed on the active material particles at a suction temperature of 120°C and a spray rate of 4.5 g/min and was then dried. Subsequently, a heat treatment was performed at 200°C, so that the cover layer of LiNbO₃ was formed on the surface of each active material particle.

After a LI₂S powder and a P₂S₅ powder were mixed together at a molar ratio of 75: 25, by a mechanical milling method, a sulfide solid electrolyte powder having a composition of Li₂S-P₂S₅ (Li₂S: P₂S₅=75: 25) was obtained.

The powdered active material particles covered with LiNbO₃ and the sulfide solid electrolyte powder were mixed together at a weight ratio of 7: 3, so that a mixture was obtained. Next, 0.5 percent by weight of a binder was added to the mixture with respect to the weight thereof, and a solvent was also added to have a solid component of 80 percent by weight, so that a positive electrode slurry was obtained. By the use of a vibration mixer (stirring machine A), the positive electrode slurry was stirred for 8 minutes. Subsequently, by the use of a planetary centrifugal mixer (stirring machine B), the positive electrode slurry was stirred for 3 minutes.

The vibration mixer (stirring machine A) repeatedly applies a strong impact to a material by application of ultrasonic wave vibration thereto. The vibration mixer is also able to disperse particles by stirring the particles while an impact is applied to the surfaces thereof. In the planetary centrifugal mixer (stirring machine B), since the two types of centrifugal forces generated by the rotation and the revolution interact with each other, a convention flow of a material is generated, so that air bubbles enclosed in the material are allowed to escape. As a result, without incorporating air bubbles, stirring of the material can be performed. The type of force removing the cover layer of the vibration mixer is an ultrasonic wave impact, and that of the planetary centrifugal mixer is a centrifugal force. By those stirring methods, the removal of the cover layer is actively performed, and the degree of the removal can be controlled.

Next, the positive electrode slurry was uniformly applied on a copper collector having a thickness of 15 µm, so that a coating film was formed on the collector. The coating film was dried, so that a positive electrode active material layer was formed. As described above, a positive electrode of Sample 1 was obtained.

A slurry containing only the solid electrolyte powder was applied on the positive electrode active material layer, and a coating film thus formed was dried, so that an electrolyte layer was formed. As a negative electrode, metal indium foil was disposed on the electrolyte layer. The positive electrode, the electrolyte layer, and the negative electrode were compressed by a press machine, so that an all-solid secondary battery of Sample 1 was obtained.

In addition, in the process of manufacturing the positive electrode of Sample 1, in order to remove a part of the cover layer and/or in order to decrease the thickness of the cover layer, the slurry was sufficiently stirred. However, in order to remove a part of the cover layer and/or in order to decrease the thickness of the cover layer, before the slurry was prepared, a step of stirring the powdered active material particles covered with the cover layers may also be performed. In this case, the electrode material described in Embodiment 1 was obtained.

### (Sample 2)

By the use of the vibration mixer (stirring machine A), the positive electrode slurry was stirred for 12 minutes. Except for that the stirring condition of the positive electrode slurry was changed, a positive electrode and an all-solid secondary battery of Sample 2 were formed by the same method as that of Sample 1.

### (Sample 3)

By the use of the planetary centrifugal mixer (stirring machine B), the positive electrode slurry was stirred for 3 minutes. Except for that the stirring condition of the positive electrode slurry was changed, a positive electrode and an all-solid secondary battery of Sample 3 were formed by the same method as that of Sample 1.

### (Sample 4)

Except for that the target film thickness of the cover layer of LiNbO₃ was changed to 30 nm, a positive electrode and an all-solid secondary battery of Sample 4 were formed by the same method as that of Sample 1.

### (Sample 5)

Except for that the cover layer of LiNbO₃ was not formed, a positive electrode and an all-solid secondary battery of Sample 5 were formed by the same method as that of Sample 1.

### (XPS Measurement)

By an X-ray photoelectron spectroscopy method, the positive electrode of each of Samples 1 to 5 was analyzed. For the analysis, PHI500 (Versa Probe) manufactured by Ulvac-Phi, Inc. was used. As a soft X-ray source, AlKα rays were used. For the analysis of the spectrum, PHI MultiPak manufactured by Ulvac-Phi, Inc. was used.

### (Charge/Discharge Test)

The charge capacity and the discharge capacity of the all-solid secondary battery of each of Samples 1 to 5 were measured. For the measurement, the charge was first performed. The charge was performed at a current of 0.05C and a charge cut-off voltage of 3.7 V. The discharge was performed at a current of 0.05C and a discharge cut-off voltage of 1.9 V. The ratio (initial coulomb efficiency) of the initial discharge capacity to the initial charge capacity was calculated. The results are shown in Table 1 and Fig. 4. The horizontal axis of Fig. 4 indicates the ratio A/B of the intensity A of the peak belonging to Nb3d_{5/2} to the intensity B of the peak belonging to Ni2p_{3/2}. The vertical axis of Fig. 4 indicates the initial coulomb efficiency of the all-solid secondary battery.

**Table 1**

| | CONSTITUENT MEMBER | | | | | STIRRING CONDITIONS | | RATIO OF XPS PEAK INTENSITY | BATTERY PERFORMANCE |
|---|---|---|---|---|---|---|---|---|---|
| | POSITIVE ELECTRODE ACTIVE MATERIAL | COVERING MATERIAL | TARGET THICKNESS | SOLID ELECTROLYTE | NEGATIVE ELECTRODE MATERIAL | FIRST STEP | SECOND STEP | Nb3d/Ni2p | INITIAL COULOMB EFFICIENCY |
| SAMPLE 1 | NCA | LiNbO₃ | 7 nm | Li₂S:P₂S₅=75:25 | In | STIRRING MACHINE A: 8 MINUTES | STIRRING MACHINE B: 3 MINUTES | 1.05 | 73% |
| SAMPLE 2 | NCA | LiNbO₃ | 7 nm | Li₂S:P₂S₅=75:25 | In | STIRRING MACHINE A: 12 MINUTES | NONE | 1.25 | 62% |
| SAMPLE 3 | NCA | LiNbO₃ | 7 nm | Li₂S:P₂S₅=75:25 | In | STIRRING MACHINE B: 3 MINUTES | NONE | 0.48 | 68% |
| SAMPLE 4 | NCA | LiNbO₃ | 30 nm | Li₂S:P₂S₅=75:25 | In | STIRRING MACHINE A: 8 MINUTES | STIRRING MACHINE B: 3 MINUTES | 2.00 | 50% |
| SAMPLE 5 | NCA | NONE | 0 nm | Li₂S:P₂S₅=75:25 | In | STIRRING MACHINE A; 8 MINUTES | STIRRING MACHINE B: 3 MINUTES | 0 | 47% |

As shown in Table 1 and Fig. 4, the all-solid secondary battery of each of Samples 1 to 3 showed a high initial coulomb efficiency. The initial coulomb efficiency of the all-solid secondary battery of each of Samples 4 and 5 was low. In particular, when the ratio A/B was 0.48 to 1.25, an initial coulomb efficiency of 62% or more was obtained. When the ratio A/B was 0.48 to 1.05, an initial coulomb efficiency of 68% or more was obtained. The all-solid secondary battery of Sample 1 showed the highest initial coulomb efficiency. In Sample 1, besides an appropriate thickness of the cover layer, since the two types of stirring methods were employed, a preferable coulomb efficiency may probably be obtained.

As shown in Table 1, the target film thickness was 7 nm or 30 nm. However, in the XPS measurement, as apparent from the result in that the peak belonging to Ni2p was observed, it is believed that in the stirring step, the average thickness of the cover layers containing niobium is decreased.

The electrode of the present disclosure includes the solid electrolyte besides the electrode material. In the electrode, Ni is only contained in the active material particle, and Nb is only contained in the cover layer. The peak of Ni2p is derived from the active material particle, and the peak of Nb3d is derived from the cover layer. Hence, the ratio A/B obtained by the XPS measurement of the electrode (in particular, the active material layer) theoretically coincides with the ratio A/B obtained by the XPS measurement of the electrode material. The volume of a part of the cover layer (LiNbO₃) removed from the surface of the active material particle in the stirring step is small. Since the part of the cover layer thus removed was smaller than the detection limit of the XPS measurement, the result of the XPS measurement is not influenced.

The technique of the present disclosure can be applied to a power storage device, such as a lithium secondary battery. The power storage device may be used for a mobile information terminal, a mobile electronic apparatus, a household power storage device, a two-wheeled motor cycle, an electric car, a hybrid electric car, and the like.

## Claims

1. An electrode material comprising:
active material particles each containing nickel; and
cover layers which cover surfaces of the respective active material particles, the cover layers each containing niobium,
wherein in an X-ray photoelectron spectrum of the electrode material, the ratio A/B of an intensity A of a peak belonging to Nb3d to an intensity B of a peak belonging to Ni2p satisfies 0<A/B<2.

2. The electrode material according to claim 1,
wherein the ratio A/B further satisfies 0.48≤A/B≤1.25.

3. The electrode material according to claim 2,
wherein the ratio A/B further satisfies 0.48≤A/B≤1.05.

4. The electrode material according to any one of the preceding claims,
wherein the cover layers cover parts of the surfaces of the respective active material particles.

5. The electrode material according to any one of the preceding claims,
wherein the active material particles each further contain cobalt and aluminum.

6. The electrode material according to any one of the preceding claims,
wherein the cover layers each have ion conductivity.

7. A battery comprising:
a positive electrode including the electrode material according to any one of the preceding claims.

8. The battery according to claim 7, further comprising:
a negative electrode; and
a sulfide solid electrolyte layer disposed between the positive electrode and the negative electrode.
